Europäisches Patentamt

(19) European Patent Office

Office européen des brevets

(11) Publication number: **0 134 881**
**B1**

# (12) EUROPEAN PATENT SPECIFICATION

(45) Date of publication of patent specification: 17.09.86

(21) Application number: 84103261.8

(22) Date of filing: 18.06.82

(60) Publication number of the earlier application in accordance with Art. 76 EPC: 0 068 355

(51) Int. Cl.⁴: **B 21 K 1/36**

## (54) Rotor and method of making same.

(30) Priority: 22.06.81 US 275949

(43) Date of publication of application:
27.03.85 Bulletin 85/13

(45) Publication of the grant of the patent:
17.09.86 Bulletin 86/38

(84) Designated Contracting States:
CH DE FR GB IT LI SE

(56) References cited:
EP-A-0 068 355
US-A-3 341 924
US-A-3 464 100

(73) Proprietor: **Vickers, Incorporated**
**1401 Crooks Road**
**Troy Michigan 48084 (US)**

(72) Inventor: **Stephan, Robert William**
**45015 Mayo Drive**
**Northville Michigan 48167 (US)**

(74) Representative: **Blumbach Weser Bergen**
**Kramer Zwirner Hoffmann Patentanwälte**
**Sonnenbergerstrasse 43**
**D-6200 Wiesbaden 1 (DE)**

Courier Press, Leamington Spa, England.

## Description

This invention relates to a method of making a rotor of a fluid energy translating device, and to the rotor so produced.

Fluid pumps or motors of the sliding vane type are known (US—A—2,967,488) which dispose of so-called intra-vane chambers under high pressure and under vane chambers which are subjected to cyclically changing pressures. Each vane has a reaction member to seal the intra-vane chamber with respect to the under vane chamber. In order to feed high pressure fluid to the intra-vane chambers, annular grooves in the cheek plates and axial passages in the rotor intersecting the vane slots have been used. This high pressure fluid tends to leak through the interfaces between the cheek plates and the rotor to the low pressure zones.

In order to avoid this leakage flow, an annular passageway (US—A—3,223,044) is arranged near the shaft of the rotor and is used to connect the intra-vane chambers. A check valve must be associated with each vane to control the flow of fluid to the chambers. A further possibility is shown (US—A—3,223,044) in that the rotor is made in two halves, each of which has an annular groove in a radial face so that when the faces of the two halves are brought into contact and joined together, the two grooves face one another to form the annular passageway. This way of making a rotor is costly because it has to withstand the hydraulic forces which tend to move the halves away from one another and create a leakage path.

The present invention is concerned with the manufacture of a rotor to be used in a fluid pump or motor of the sliding vane type which is easier and less costly to manufacture and which results in a rotor that has higher strength.

A forged piston having an oil gallery is known (US—A—3,341,924) which is made starting from an annular groove in the piston end face. The piston blank is heated to forging temperature in the region of 400 to 500°C. A ring, which melts below that temperature, is inserted into the annular groove which, thereupon, is closed by forging on the end face of the piston blank. A plurality of holes are drilled through the bottom wall of the piston head and the material of the melting ring is removed. This method cannot be used for making rotors of the sliding vane type since the annular groove does not open into a generally flat side of the blank but opens at the periphery which is generally cylindrically formed.

Another known piston (US—A—3,464,100) has a cooling fluid circulation arrangement including an annular duct and a plurality of recesses which are blocked and filled by a plurality of annular segments. The annular duct is undercut and, therefore, costly to make.

The rotor can be made easier and less costly and with higher strength when applying the features of claim 1.

The method comprises forming an annular groove in the periphery of a solid body, closing the open side of the groove to provide the annular passage, thereafter forming radial vane slots in the body intersecting the annular passage and forming axial openings in the body intersecting the annular passage.

### Description of the Drawings

FIG. 1 is a partial longitudinal sectional view through a pump embodying the invention.

FIG. 2 is a sectional view of a rotor forming a part of the pump shown in FIG. 1;

FIG. 3 is a fragmentary perspective view of a portion of the pump;

FIG. 4 shows a partial cross section of a rotor;

FIG. 5 shows an intermediate step when producing a rotor.

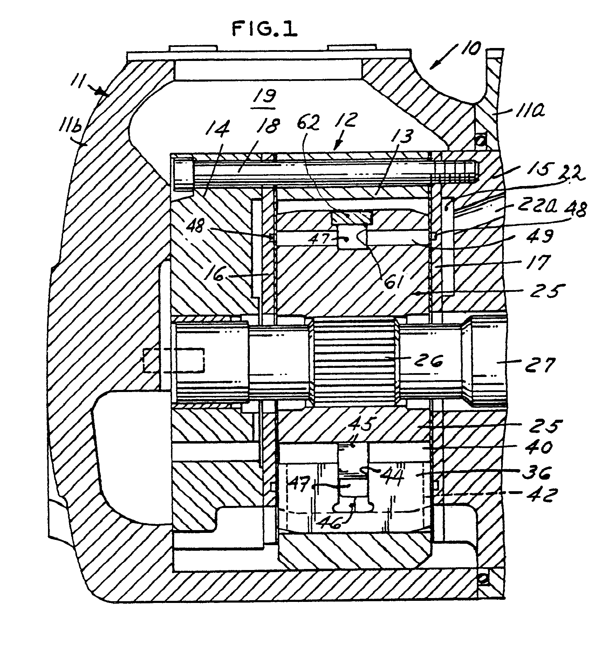

As shown in FIG. 1, a rotary sliding vane device or pump 10 comprises a casing 11 and a cartridge or subassembly 12. Casing 11 includes a body 11a and a cover 11b. The cartridge 12 includes a cam ring 13 sandwiched between support plates 14, 15 with intermediate cheek plates 16, 17 all of which are secured to each other by bolts 18 extending through support plate 14 and cam 13 into threaded holes in support plate 15. The cover 11b is provided with an inlet supply connection port 19 leading to inlet zones of the pump through passages formed around the cam ring 13 and openings in the cheek plates 16, 17.

An outlet connection port, not shown, is provided in the body 11a and is directly connected by a passage 22a to a fluid discharge chamber 22 formed in support plate 15.

A rotor 25 is rotatably mounted within the cam ring 13 on the splined portion of a shaft 27 which is rotatably mounted within the casing 11.

Cam ring 13 has an internal contour which is substantially oval in shape and which, together with the periphery of the rotor 25 and the adjoining surfaces of the cheek plates 16, 17, define two opposed pumping chambers each of which has fluid inlet and fluid outlet zones.

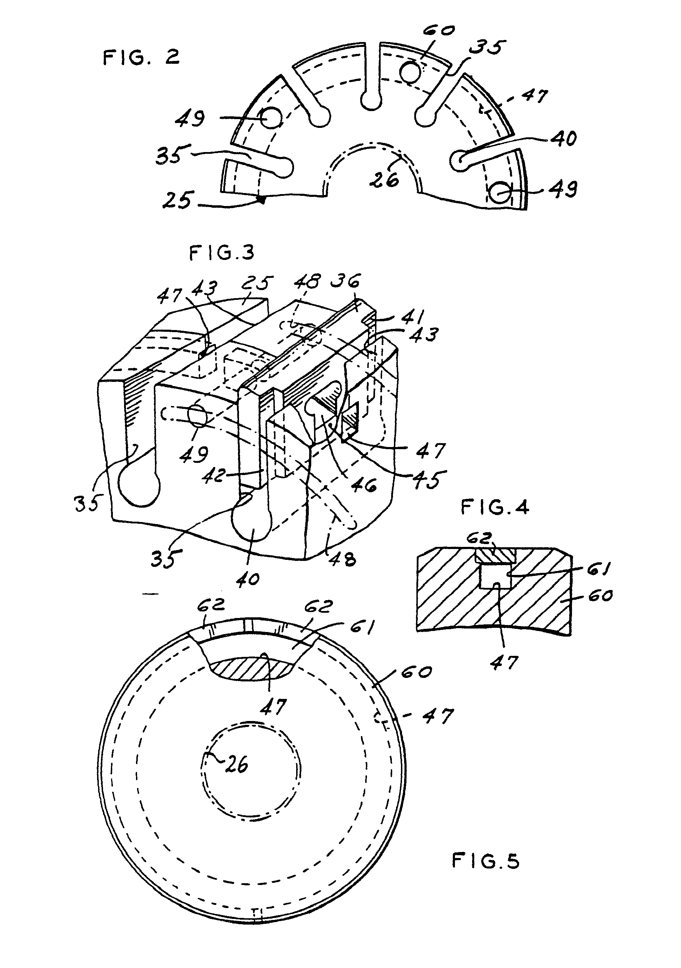

The rotor is provided with a plurality of radial vane slots 35 (FIG. 2) each of which has a vane 36 (FIG. 1) slidably mounted therein. The outer ends or vane tips of vane 36 engage the inner contour of cam ring 13. The contour of cam ring 13 includes an inlet rise portion, an intermediate arc portion, an outlet fall portion, and another arc portion. The cam contour is symmetrical about its minor axis, thus each of the rise, fall and arc portions are duplicated in the other opposed portion of the contour. As the tips of vane 36 carried by the rotor 25 traverse the inlet rise portions, the vane 36 move radially outward with respect to the rotor 25, and when the vane tips traverse the outlet fall portions, the vanes 36 move radially inward. The spacing between each pair of vanes 36 is adapted to span the distance between each pair of ports in a manner to provide proper sealing between the inlet and outlet of the pumping device.

Each vane 36 has a rectangular notch 44 extending from the inner end or base of the vane to substantially the mid-section thereof. A reaction member 45 comprises a flat sided blade substantially equal in width and thickness to that of the notch 44 so as to have a sliding fit within the vane 36 and the rotor 25, i.e. the side walls of each vane slot 35. The side walls of each vane slot 35 and notch 44 in the vane 36 together with the reaction member 45 therein define an expansible intra-vane chamber 46. An under vane chamber 40 is defined by the base of each vane 36 and the base and side walls of each rotor vane slot 35. Pairs of chambers 46 and 40 are separated by an sealed from each other by each a reaction member 45.

Each under vane chamber 40, associated with the base of each vane 36, is provided with fluid pressure by its radial passages 42 along each side of each vane 36. Passage 42 is defined by a groove 41 (FIG. 3) in each of the vane, by a surface 43 of the rotor vane slot 35, and by the inner surface of cheek plates 16, 17. The radial passages 42 transmit fluid to the under vane chambers 40 and, thus, to the bases of the vanes 36. Thus, the cyclically changing pressure which is exerted on the tips of the vanes 36 as they traverse the inlet and outlet portions of the cam contour is transmitted to the bases of the vanes 36.

An annular closed passage 47 entirely within rotor 25 provides communication between the intra-vane chambers 46.

Axial openings 49 formed in the side of rotor 25 extend to and intersect with the annular passage 47. Fluid under pressure from radial passages 42 is supplied to the annular passage 47 by an arcuate valving groove 48 in the inner face of each cheek plate 16, 17. The groove 48 extends about a portion of the travel of rotor 25 in the outlet fall or high pressure zone. As the rotor 25 rotates, radial passage 42 communicates through arcuate groove 48 with axial opening 49 and with annular passage 47. Since the vanes 36 are moving radially inward in the outlet fall zones, the vanes 36 displace fluid from the under vane chambers 40 through the restriction provided by the radial passages 42. An elevated fluid pressure gradient is thereby produced in the radial passages 42. As the radial passages 42 move across the arcuate groove 48, the elevated fluid pressure is transmitted to the intra-vane chambers 46 through the axial openings 49 and the annular passage 47. The elevated fluid pressure is continuously transmitted to the intra-vane chambers 46 and acts to move the vanes 36 radially outward and hold the reaction members 45 against the base of the under vane chambers 40.

The rotor 25 is preferably made by machining a cylindrical body 60 (FIG. 4, 5 and 2) and an axial opening therein along its center line. In the axial opening, a spline 26 is formed, which is used as a means for alining and supporting the body 60. By further machining, an annular groove 61 is formed. One or more segments 62 are inserted in the groove 61 and bonded to the side walls of the groove to define the annular passage 47. The axial openings 49 are formed by drilling either before or after the radial slots 35 are formed.

The bonding of the segments 62 is preferably achieved by welding although brazing may also be used.

In this form, the welded surfaces are limited to the area of the annular passage 47 and do not extend along the entire surface of a rotor half. As a result, the need for pressure-tight fused connections at the base of the vane slots 35 and other high pressure points in the rotor is eliminated. Moreover, visual inspection of the welds from the outer diameter is possible and adequate. Since three sides of the annular passage 47 are formed in the one-piece body 60, the fluid pressure forces in the direction of the rotor axis do not react on any joint connection. The stresses due to radially outward fluid pressure on the joined surfaces, which are small, are of a very low magnitude resulting in a high strength rotor assembly.

The method is such that high volume production of the rotor is possible.

## Claims

1. A method for making a rotor (25) of a fluid energy translating device, which comprises
   forming an axial center opening in a solid body (60) of generally cylindrical shape,
   forming an annular groove (61) in the cylindrical face of said body around the periphery thereof,
   closing the open side of said groove (61) by positioning at least one segment (62) in the groove (61) so as to provide an annular passage (47) entirely within the body (60) and bonding said segment (62) to the side walls of said groove (61) so as to provide a fluid pressure seal at the cylindrical face,
   thereafter forming radial slots (35) in the periphery of said body (60) intersecting said annular passage (47), and forming axial openings (49) in said body (60) intermediate said slots (35) intersecting said annular passage (47).

2. The method set forth in claim 1, wherein at least two segments (62) are positioned in said groove (61) with the ends of said segments (62) spaced from one another to define a locating point, and utilizing said locating point for forming the first of said radial slots (35).

3. The method set forth in claim 1 or 2, wherein said bonding comprises electron beam welding.

4. The method set forth in claim 1 or 2, wherein said bonding comprises brazing.

5. A rotor made in accordance with claims 1 to 4, comprising
   a solid one-piece body (60) of generally cylindrical shape,
   an annular groove (61) in the periphery of said body (60),
   segment means (62) closing said groove (61) to form an annular passage (47) and being bonded to said body (60),
   a plurality of circumferentially spaced radial vane receiving slots (35) in said body (60) intersecting said annular passage (47) and an axial opening (49) in the body (60) leading to said annular passage (47).

## Patentansprüche

1. Verfahren zur Herstellung eines Rotors (25) einer Fluidenergie-Umwandlungsmaschine mit folgenden Schritten:

in einem festen Körper (60) von im großen und ganzen zylindrischer Gestalt wird eine mittige axiale Öffnung gebildet; im Zylindermantel des Körpers um dessen Peripherie herum wird eine Ringnut (61) gebildet;

die offene Seite der Nut (61) wird zur Bildung eines ringförmigen, ganz innerhalb des Körpers (60) verlaufenden Kanals (47) durch Einfügen mindestens eines Segments (62) in die Nut (61) geschlossen, und das Segment (62) wird mit den Seitenwandungen der Nut (61) haftend verbunden, um eine Abdichtung an dem Zylindermantel gegenüber Fluiddruck zu schaffen;

danach werden radiale Schlitze (35) in der Peripherie des Körpers (60) gebildet, welche den ringförmigen Kanal (47) schneiden, und

zwischen den Schlitzen (35) werden in den Körper (60) axiale Bohrungen (49) angebracht, welche den ringförmigen Kanal (47) schneiden.

2. Verfahren nach Anspruch 1, bei welchem mindestens zwei Segmente (62) in der Nut (61) mit ihren Enden im Abstand voneinander eingefügt sind, so daß eine Ansatzstelle entsteht, an der der erste radiale Schlitz (35) gebildet wird.

3. Verfahren nach Anspruch 1 oder 2, wobei der Schritt des haftenden Verbindens das Elektronenstrahlschweißen einschließt.

4. Verfahren nach Anspruch 1, wobei der Schritt des haftenden Verbindens das Hartlöten einschließt.

5. Rotor, hergestellt gemäß Ansprüchen 1 bis 4 und mit folgender Ausbildung:

ein fester, einstückiger Körper (60) weist eine im großen und ganzen zylindrische Gestalt auf;

ein ringförmige Nut (61) ist in der Peripherie des Körpers (60) angebracht;

Segmenteinrichtungen (62) verschließen die Nut (61) zur Bildung eines ringförmigen Kanals (47) und sind mit dem Körper (60) haftend verbunden;

in dem Körper (60) ist eine Mehrzahl von Schlitzen (35) in Umfangsrichtung verteilt angeordnet sowie zur Aufnahme der radialen Flügel vorgesehen und schneiden den ringförmigen Kanal (47), und

eine axial Bohrung (49) im Körper (60) führt zu dem ringförmigen Kanal (47).

## Revendications

1. Procédé de fabrication d'un rotor (25) d'un dispositif de transport d'énergie hydraulique, comportant le fait d'usiner une ouverture axiale centrale dans un corps plein (60) de forme générale cylindrique,

le fait d'usiner une rainure annulaire (61) dans la face cylindrique dudit corps, autour de sa périphérie,

le fait de fermer le côté ouvert de ladite rainure (61) en plaçant au moins un segment (62) dans la rainure (61) de façon à obtenir un passage annulaire (47) entièrement situé à l'intérieur du corps (60) et l'étape de liaison dudit segment (62) aux parois latérales de ladite rainure (61) de façon à réaliser une étanchéité à la pression hydraulique sur la face cylindrique,

le fait ensuite d'usiner, à la périphérie dudit corps (60), des encoches radiales (35) qui recoupent ledit passage annulaire (47) et d'usiner dans ledit corps (60) entre lesdites encoches (35), des ouvertures axiales (49) qui recoupent ledit passage annulaire (47).

2. Le procédé selon la revendication 1, dans lequel on place dans ladite rainure (61) au moins deux segments (62), les extrémités desdits segments (62) étant espacées l'une de l'autre pour définir un emplacement, et dans lequel on utilise ledit emplacement pour réaliser la première desdites encoches radiales (35).

3. Le procédé selon la revendication 1 ou 2, dans lequel ladite étape de liaison comporte une soudure par faisceau électronique.

4. Le procédé selon la revendication 1 ou 2, dans lequel ladite étape de liaison comporte une brasure.

5. Rotor fabriqué selon les revendications 1 à 4, comportant

un corps plein d'une pièce (60) de forme générale cylindrique,

une rainure annulaire (61) à la périphérie dudit corps (60), des moyens du type segment (62) qui ferment ladite rainure (61) pour réaliser un passage annulaire (47) et sont liés audit corps (60),

un certain nombre d'encoches de réception des ailettes radiales,

espacées sur la circonférence dans ledit corps (60), recoupant ledit passage annulaire (47); ainsi qu'une ouverture axiale (49) dans le corps (60) conduisant audit passage annulaire (47).

## FIG.1

FIG. 2

FIG.3

FIG.4

FIG.5